**Europäisches Patentamt**

**European Patent Office**

**Office européen des brevets**

(19)

(11) Veröffentlichungsnummer: **0 182 181 B1**

(12) ## EUROPÄISCHE PATENTSCHRIFT

(45) Veröffentlichungstag der Patentschrift:
31.05.89

(21) Anmeldenummer: 85113994.9

(22) Anmeldetag: 04.11.85

(51) Int. Cl.⁴: **H01G 4/32,** H01G 1/02,
H01G 1/10

(54) Elektrischer Wickelkondensator.

(30) Priorität: **15.11.84 DE 3441828**

(43) Veröffentlichungstag der Anmeldung:
28.05.86 Patentblatt 86/22

(45) Bekanntmachung des Hinweises auf die Patenterteilung:
31.05.89 Patentblatt 89/22

(84) Benannte Vertragsstaaten:
DE FR GB IT

(56) Entgegenhaltungen:
DE-A- 3 239 865
DE-C- 968 940
FR-A- 2 174 904
GB-A- 1 489 638
US-A- 3 731 130

RADIO MENTOR ELECTRONICS, Band 42, Nr. 8, 1976,
Seiten 298-299, München, DE; K.E. HELF et al.:
"Polyester-Schrumpffolie vereinfacht
Wickelkondensatoren"

(73) Patentinhaber: **Siemens Aktiengesellschaft Berlin und
München, Wittelsbacherplatz 2, D-8000 München 2(DE)**

(72) Erfinder: **Edler, Wolfgang, Dipl.-Phys., Ringstrasse 21,
D-7923 Königsbronn(DE)**
Erfinder: **Fetzer, Jürgen, Dipl.-Phys., Mühlstrasse 19,
D-7929 Dettingen(DE)**
Erfinder: **Hieber, Udo, Knupfertal 94,
D-7920 Heidenheim(DE)**
Erfinder: **Soiar, Josef, Dipl.-Ing.,
Albert-Schweitzer-Strasse 51, D-7920 Heidenheim(DE)**

## Beschreibung

Die Erfindung betrifft einen elektrischen Wickelkondensator mit stirnkontaktierten Wickeln, die in ein Gehäuse eingebaut und durch eine Bandage verfestigt sind, wobei die Bandage teilweise die geschoopten Stirnkontaktflächen umgreift.

Ein derartiger Kondensator ist aus der DE-A 3 239 865 bekannt. Dort besteht die Bandage aus einem glasfaserverstärkten Kunstharzverbund und hat die Aufgabe, den Kondensatorwickel zu verfestigen. Hierdurch soll ein Aufplatzen des Gehäuses verhindert werden; diese Gefahr besteht bei Leistungskondensatoren, insbesondere bei Stützkondensatoren, wenn es in Extremfällen zum Überzünden und dadurch zum Ausfall des Kondensators kommt. Die in Kondensatoren im allgemeinen angeordnete Überdruckabreißsicherung ist in diesen Fällen zu träge, da beim Überzünden die Gefahr einer Explosion des Kondensatorwickels besteht. Neben der Gefahr, daß das Kondensatorgehäuse explosionsartig zerstört wird, besteht bei Kondensatoren, die mit einem Imprägniermittel aus einem Öl getränkt sind, zusätzlich die Gefahr eines Brandes.

Die bekannte Bandage aus einem glasfaserverstärkten Kunstharzverbund ist einerseits aufwendig herzustellen und garantiert andererseits allein auch nicht in jedem Fall, daß ein Aufplatzen des Kondensatorgehäuses vermieden werden kann.

Weiterhin ist aus der US-A 3 731 130 ein Kondensator bekannt, bei dem die Bandage aus einer "Muffe" aus Polyvinylchlorid mit einer hohen Wärmeschrumpfung besteht und die die Aufgabe hat, den Kondensatorwickel vor Oxidations- und Feuereinwirkungen zu schützen. Der Kondensator ist dabei in ein Aluminiumgehäuse eingebaut, das kein Imprägniermittel enthält.

Aus der Zeitschrift "Radio Mentor Electronics", Bd. 42, Nr. 8, 1976, S. 298 bis 299 ist es bekannt, bei Wickelkondensatoren mit selbständigen Elektrodenfolien und eingelegten axialen Anschlüssen Polyester-Schrumpffolien als Dielektrikumsfolien zu verwenden.

Ein wirksamer Explosionsschutz ist durch die im Stand der Technik geschilderten Maßnahmen nicht gewährleistet.

Aufgabe der Erfindung ist es, einen elektrischen Wickelkondensator der eingangs genannten Art anzugeben, der in preisgünstiger und sicherer Weise gegen ein Aufplatzen des Gehäuses auch in Extremfällen ausreichend gesichert ist.

Diese Aufgabe wird erfindungsgemäß dadurch gelöst, daß die Bandage aus einem Schrumpfschlauch oder einer schrumpfbaren um den Wickel gelegten Folie besteht, der bzw. die durch Wärmeeinwirkung geschrumpft ist, daß das Gehäuse aus Edelstahl besteht, daß zwischen Bandage und Gehäusewand ein mit Imprägniermittel gefüllter Spalt angeordnet ist und daß die Bandage beim Bersten des aktiven Kondensatorwickels die Punkt- oder Linienbelastung flächig an das Imprägniermittel weitergibt.

Vorzugsweise besteht die Bandage aus Polyester.

Die Vorteile des Gegenstandes der Erfindung werden anhand des folgenden Ausführungsbeispiels erläutert.

In der dazugehörenden Zeichnung ist die Ansicht eines Kondensators in teilweise geschnittener Darstellung gezeigt. Der Kondensator ist in ein Gehäuse 1 eingebaut, das aus Edelstahl besteht. Der Kondensator besteht aus einem oder mehreren Wickeln 2, die mit aufgeschoopten Stirnkontaktflächen versehen sind. Im Deckel des Gehäuses 1 sind äußere Anschlußelemente 7 angeordnet. Der Kondensatorwickel 2 ist von einem geschrumpften Polyesterschrumpfschlauch 4 umgeben, der teilweise die geschoopten Stirnkontaktflächen 3 umgreift. Zur Halterung des Kondensatorwickels 2 mit der Schrumpfschlauchumhüllung 4 im Kondensatorgehäuse 1 ist ein Isolierstoffteil 5 auf dem Boden des Kondensatorgehäuses 1 angeordnet.

Zwischen der Schrumpfschlauchumhüllung 4 und der Wand des Gehäuses 1 befindet sich ein mit Imprägniermittel 6 gefüllter Spalt. Das Imprägniermittel 6 besteht beispielsweise aus einem elektronegativen Gas, z.B. $SF_6$, oder einem Isolieröl.

Das Aufplatzen des Kondensatorgehäuses 1 selbst bei explosionsartigem Überzünden wird durch das Zusammenwirken der einzelnen Merkmale in sicherer Weise verhindert. Der um den Kondensatorwickel 2 geschrumpfte Schrumpfschlauch 4 erhöht den Wickeldruck in den äußeren Wickelzonen und verschiebt das Durchzünden von Schoopschicht zu Schoopschicht 3 (durch den Kondensatorwickel 2 hindurch) zu höheren Spannungen. Da der Schrumpfschlauch 4 über einen Teil der geschoopten Wickelfläche 3 übergreift, wird die Isolation zwischen Schoopschicht 3 und Kondensatorgehäuse 1 verbessert, wodurch ein Überzünden von der Schoopschicht 3 zum Kondensatorgehäuse 1 zu wesentlich höheren Spannungen verschoben wird bzw. nicht mehr auftreten kann.

Kommt es durch Alterung oder andere Einflüsse doch zu einem Durchzünden im Kondensatorwickel 2, so wird ein Aufplatzen des Kondensatorgehäuses 1 durch das nachstehend beschriebene Zusammenwirken von Schrumpfschlauch 4 und Gehäusemantel 1 aus Edelstahl verhindert. Durch die Gaserzeugung beim Durchzünden wird der Kondensatorwickel 4 aufgerissen. Der elastische Schrumpfschlauch 4 reißt aber nicht, umhüllt den Wickel 2 weiterhin und überträgt die Berstenergie (Punkt- oder Linienbelastung). Der Druck der Plasmawolke wird damit durch den Schrumpfschlauch 4 aufgenommen, verteilt und an das den Wickel 2 umgebende Imprägniermittel 6 weitergegeben. Die Berstenergie wird somit von dem Schrumpfschlauch 4 über das freie Imprägniermittel 6 an den Edelstahlmantel 1 weitergegeben. Durch Dehnung des Mantels 1 in diesem Bereich wird die verbleibende Energie in Verformungsarbeit umgewandelt. Positiv wirkt sich hier die hohe Verformbarkeit des Edelstahls aus, der sich bis zum Bruch um 50 % längen kann.

Gleichzeitig wird durch den Schrumpfschlauch 4 sichergestellt, daß bei Verwendung eines Islieröles als Imprägniermittel ein Kontakt der Plasmawolke mit dem freien Imprägnieröl nicht erfolgt und damit die Bildung von Ölschwaden verhindert wird, die den Explosionsverlauf wesentlich verstärken würde.

Das System Kondensatorwickel 2, Wickelbandage 4 und Kondensatorgehäuse 1 muß vom möglichen Energieangebot in dem Wickel 2 über die Elastizität des Schrumpfschlauches 4 bis zur unelastischen Verformbarkeit des Gehäuses 1 so abgestimmt sein, daß ein Bruch nicht auftreten kann. Dadurch wird auch verhindert, daß Sauerstoff mit der Plasmawolke und den möglicherweise vorhandenen Ölschwaden in Berührung kommt. Ein Kondensator- bzw. Ölbrand wird dadurch ausgeschlossen.

Besteht der Kondensator aus mehreren Teilwickeln, so weist jeder dieser Wickel die genannte Schrumpfschlauchbandage auf.

Bei einem bevorzugten Ausführungsbeispiel eines Kondensators der Nenndaten $U_N$ = 3600 V=; $C_N$ = 120 µF und einem Wickeldurchmesser von ca. 170 mm besteht die Bandage 4 aus zwei Lagen Polyesterschrumpfschlauch von je ca. 400 µm Dicke im ungeschrumpften Zustand. Der Kondensator ist mit einem Isolieröl 6 getränkt, das auch den Spalt der Breite ca. 1,0 mm zwischen Schrumpfschlauch 4 und Kondensatorgehäuse 1 ausfüllt. Das Kondensatorgehäuse 1 besteht aus einem Edelstahlbehälter der Wandstärke ca. 0,5 mm.

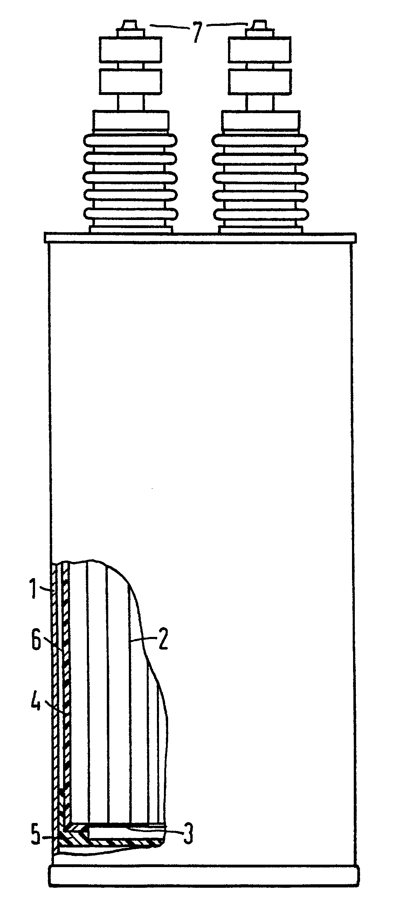

## Patentansprüche

1. Elektrischer Wickelkondensator mit stirnkontaktierten Wickeln, die in ein Gehäuse eingebaut und durch eine Bandage verfestigt sind, wobei die Bandage teilweise die geschoopten Stirnkontaktflächen umgreift, dadurch gekennzeichnet, daß die Bandage (4) aus einem Schrumpfschlauch oder einer schrumpfbaren um den Wickel gelegten Folie besteht der bzw. die durch Wärmeeinwirkung geschrumpft ist, daß das Gehäuse (1) aus Edelstahl besteht, daß zwischen Bandage (4) und Gehäusewand (1) ein mit Imprägniermittel (6) gefüllter Spalt angeordnet ist, und daß die Bandage (4) beim Bersten des aktiven Kondensatorwickels (2) die Punktoder Linienbelastung flächig an das Imprägniermittel (6) weitergibt.

2. Elektrischer Wickelkondensator nach Anspruch 1, dadurch gekennzeichnet, daß die Bandage (4) aus Polyester besteht.

## Claims

1. Roll-type electric capacitor having end-contacted rolls which are fitted into a housing and fastened by a bandage, the bandage partially embracing the metal-sprayed end contact surfaces, characterized in that the bandage (4) consists of a shrink-fit tube or a shrinkable film laid around the roll, which tube or film is shrunk by the effect of heat, in that the housing (1) consists of stainless steel, in that a gap filled with impregnating medium (6) is arranged between bandage (4) and housing wall (1), and in that, in the event of bursting of the active capacitor roll (2), the bandage (4) passes on the point of line loading in an areal manner to the impregnating medium (6).

2. Roll-type electric capacitor according to Claim 1, characterized in that the bandage (4) consists of polyester.

## Revendications

1. Condensateur électrique enroulé comportant des enroulements à contacts frontaux, qui sont insérés dans un boîtier et y sont fixés par un bandage, le bandage entourant partiellement les surfaces frontales de contact traitées par schoopage, caractérisé par le fait que le bandage (4) est constitué par un tuyau rétractable ou une feuille rétractable appliquée autour de l'enroulement, ce tuyau ou cette feuille étant rétracté sous l'action de la chaleur, que le boîtier (1) est réalisé en acier spécial, qu'une fente remplie par un agent d'imprégnation (6) est ménagée entre le bandage (4) et la paroi (1) du boîtier et que, lors de l'éclatement de l'enroulement actif (2) du condensateur, le bandage applique la charge ponctuelle ou linéaire, suivant une surface, à l'agent d'imprégnation (6).

2. Condensateur électrique enroulé suivant la revendication 1, caractérisé par le fait que le bandage (4) est réalisé en polyester.